# EUROPEAN PATENT SPECIFICATION

(11) **EP 0 664 210 B1**
(45) Date of publication and mention of the grant of the patent: **28.02.2001**
(21) Application number: 94120080.0
(22) Date of filing: 19.12.1994
(51) Int. Cl.: B32B 31/00, B32B 15/08, B29C 70/34, B29C 51/14, B21D 22/00

(54) **Method for forming an element of composite material and panel of composite material**
Verfahren zur Herstellung eines Verbundwerkstoffelementes und Platte aus Verbundwerkstoff
Procédé de fabrication d'un elément en matériau composite et panneau en matériau composite

(30) Priority: 19.01.1994 IT TO940025
(43) Date of publication of application: 26.07.1995
(73) Proprietor: FIAT AUTO S.p.A., 10135 Torino (IT)
(72) Inventor: Da Re', Mario, I-10128 Torino (IT)
(74) Representative: Quinterno, Giuseppe

(56) References cited:
- EP-A- 0 155 820
- EP-A- 0 500 376
- EP-A- 0 547 664
- GB-A- 1 200 499
- US-A- 3 578 552
- US-A- 3 690 980

## Description

The present invention relates to a method for the forming of an element of composite material usable, for example, as a structural element of a vehicle.

Laminated elements of composite material, generally known as "sheet-metal sandwiches", are known and are formed from pairs of thin metal sheets, for example, both of steel or of aluminium, or one of steel and the other of aluminium, between which a layer of polymeric adhesive is interposed.

These composite elements have good mechanical strength characteristics and good insulating properties insulators against heat, noise and vibrations, as well as quite low weight, and are thus often used as structural elements in the construction of vehicles, particularly near regions which are subject to considerable temperatures or vibrations.

Sheet-metal sandwiches are generally produced and marketed by the producers of sheet-steel or aluminium, who produce and sell them directly in the form of large rolls or "coils" each made from a pair of metal sheets connected by means of an intermediate layer of polymeric adhesive, which is already polymerized in the product sold.

The composite elements which can be produced by the subdivision of the coils, however, have disadvantages because their maximum dimensions are limited by the standard dimensions of the coils and it is thus not always possible to produce individual elements having optimal dimensions to form structural elements, for example, of vehicles, from the coils. Moreover, these composite elements are not very suitable for undergoing the mechanical operations which are necessary to shape them for use.

In particular, panels made from the known sheet-metal sandwiches are not very suitable for pressing since, during the pressing step, relative slippage occurs between the outer sheets of the panel, causing separation of the intermediate layer of polymerized adhesive, thus worsening the mechanical and insulating characteristics of the panel. For this reason, these known panels are generally subjected only to mechanical bending operations. Moreover, they are difficult to weld and any welding operations may damage the intermediate layer of polymeric adhesive.

US-A-3 690 980, EP-A-155 820 and GB-A-1 200 499 disclose a method having the features contained in the pre-characterising portion of appended claim 1.

The main object of the present invention is to propose a method of forming an element of composite material which prevents the problems mentioned above.

This object is achieved, according to the invention, by virtue of a method having the features set forth in claim 1.

By virtue of these characteristics, it is possible to produce panels and structural elements of the desired sizes and shapes, which can be subjected to mechanical cold-forming operations of any type, for example, pressing or drawing, without the intermediate polymeric layer being damaged during the forming step since it is not polymerized and permits relative movements between the sheet-metal elements which can therefore deform freely. Moreover, the elements of composite material thus produced withstand welding operations without problems.

US-A-3 578 552, EP-A-155 820 and GB-A-1 200 499 disclose a panel of composite material having the features indicated in the pre-characterising portion of appended claim 11.

Another subject of the invention is a panel of composite material having the features set forth in claim 11.

Further characteristics and advantages of the present invention will become clearer from the following detailed description given with reference to the appended drawings, which are provided purely by way of non-limiting example, in which:

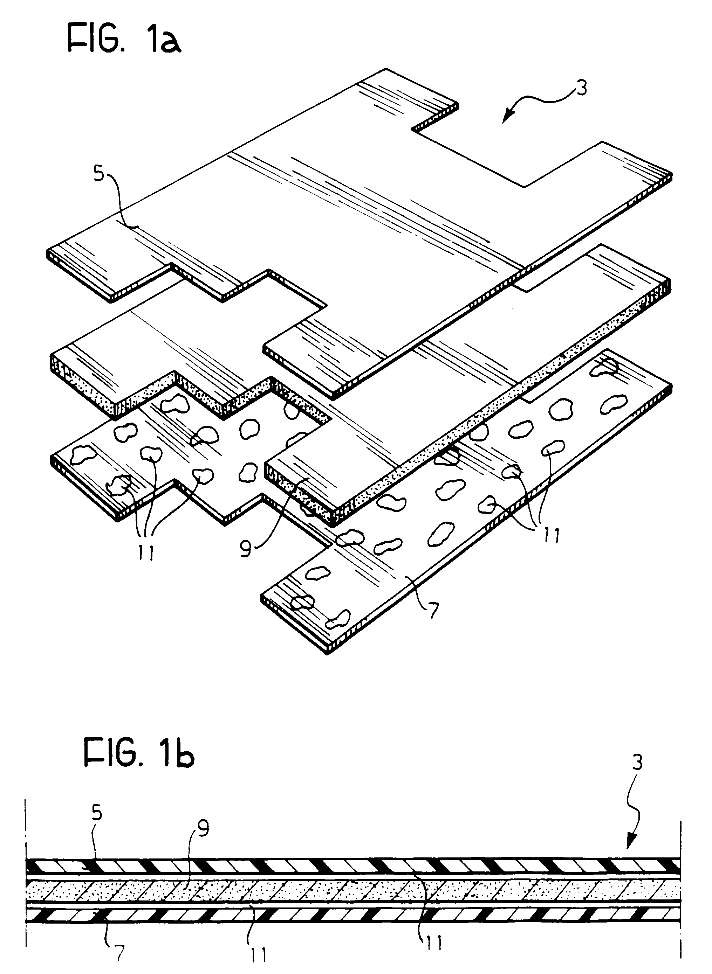

Figure 1a is a schematic, perspective view of a plurality of elements which are intended to be joined together in order to form a panel of composite material,
Figure 1b is a sectioned, elevational view of the elements of Figure la placed side by side,
Figure 2 is a sectioned side elevational view of the panel of Figure 1b undergoing a cold mechanical forming step by pressing, and

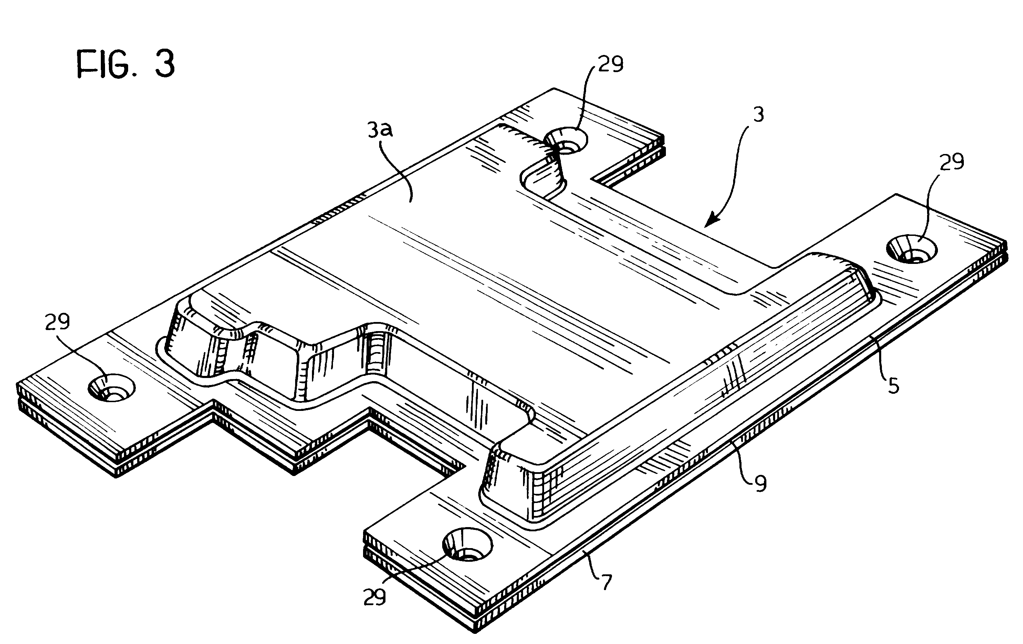

Figure 3 is a perspective view of the panel of Figure 2 after the pressing step.

With reference to the drawings, a panel 3 of composite material is made from a pair of shaped sheet-metal elements 5 and 7, between which a non-polymerized polymeric adhesive 11 is interposed.

An intermediate reinforcing layer 9, preferably shaped in the same manner as the elements 5 and 7, is preferably interposed between the sheet-metal elements 5 and 7, and is constituted, for example, by woven or non-woven carbon, glass or aramide fibres.

The metal sheets 5 and 7 may be treated beforehand to eliminate traces of grease or of various impurities, and of moisture, in order to favour the adhesion of the polymeric adhesive 11 thereto. In particular, they may be subjected to a first pickling step, after which a primer or a priming coat may be applied. If the metal sheets 5 and 7 are galvanized or pre-painted, it is not necessary to use the primer, since the polymeric adhesive 11 adheres very well to the surfaces of metal sheets thus treated.

The polymeric adhesive 11 is then applied to one of the metal sheets 5 and 7, if the layer 9 is not present, whereas, if the intermediate layer 9 is present, the polymeric adhesive 11 is applied to both of the metal sheets 5 and 7 on their surfaces which are intended to face towards the reinforcing layer 9, so that the adhesive 11 is interposed between the metal sheets and the layer 9.

The polymeric adhesive 11 used is a thermosetting adhesive so that the final structural element has good mechanical characteristics and good resistance to heat.

The adhesive 11 is supplied in a plurality of distinct piles or heaps, automatically or with a static mixing gun without the need to use additional steps to spread it uniformly.

Alternatively, the intermediate layer 9 may be constituted by a sheet of strong fibres, wherein the polymeric adhesive 11 is distributed in a plurality of distinct heaps applied to both of the metal sheets 5 and 7 on their surfaces which are intended to face towards the intermediate layer 9.

The sheet-metal elements 5 and 7 and any intermediate layer 9 are then placed side by side and the composite panel 3 thus obtained can be disposed in a double-acting press to undergo a mechanical cold-forming step, for example, a primary drawing step.

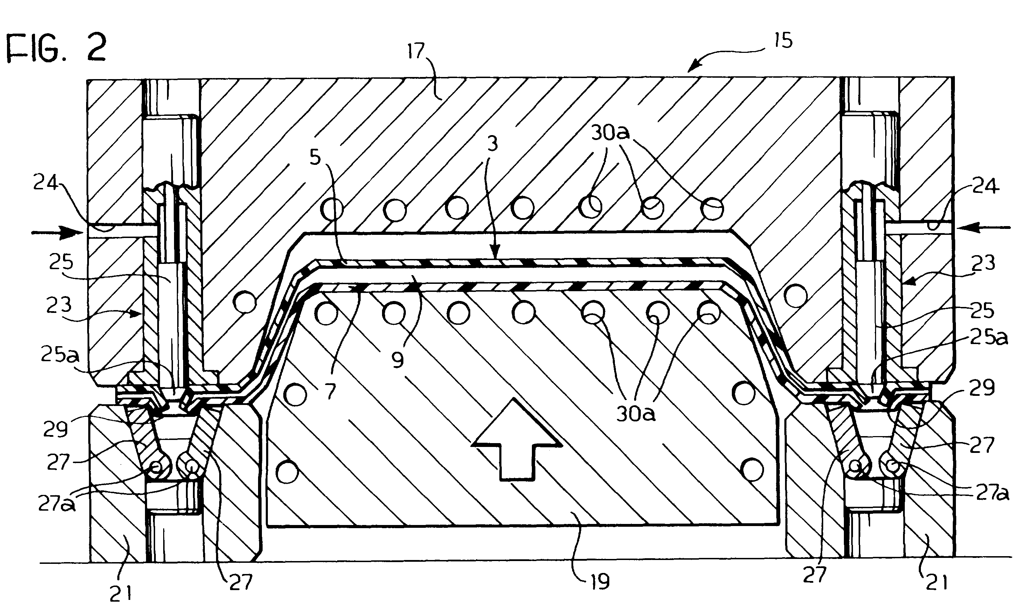

Figure 2 shows a drawing die, indicated 15, comprising a hollow matrix 17 and a punch 19 which is movable vertically (with reference to the drawing). The die 15 comprises a pressure bar 21 for keeping the panel 3 firmly in position during the drawing step.

To allow optimal relative positioning of the elements 5, 7 and 9 making up the panel 3 during the drawing step and, in particular, to prevent relative slippage between the elements, automatic clamping devices, for example, of the known type called "clinching" devices, two of which are indicated 23 in Figure 2, are preferably used.

Each device 23 comprises a piston 25 slidable in the matrix 17 along a line perpendicular to the panel 3 at the edges thereof. Each piston 25 has a conical head 25a facing the panel 3 and an opposite end facing a chamber into which a pressurized fluid is supplied through a delivery duct 24. The pressure bar 21 has seats corresponding to the pistons 25, each comprising a plurality of lateral elements 27 which define each seat and are articulated at 27a, and which can move apart as a result of the approach of the conical head 25a of the piston 25. Before the punch 19 moves towards the matrix 17 and after the panel 3 has been clamped by means of the pressure bar 21, the pressurized fluid is supplied through the ducts 24 in order to move the pistons 25 towards the panel 3. The heads 25a extend through the panel 3 also causing angular displacement of the elements 27 so that holes with upset edges 29 are formed along the edges of the panel 3. The upset edges 29 enable the elements 5, 7 and 9 which make up the panel 3 to be held firmly in their respective positions during the drawing step.

The punch 19 is then moved towards the matrix 17 to carry out the primary drawing step, during which the polymeric adhesive 11 is automatically spread uniformly within the panel 3.

Because a thermosetting polymeric adhesive 11 is used, the die 15 has internal heating devices such as, for example, a plurality of ducts 30a in the matrix 17 and in the punch 19, into which a heating fluid, for example, oil at about 70°C is supplied, or in which there may be electrical resistances so that, already during the pressing step, the polymeric adhesive 11 undergoes heating such as to bring about partial polymerization. The adhesive 11 is in any case subjected to limited pre-polymerization as a result of the heat developed during the pressing step because of the mechanical pressures and stresses involved.

Naturally, it is also possible to use a pressing device other than that shown, for example, including an elastomeric punch, so as further to favour the drawing of the panel, considerably reducing the local tensions generated in the course of the forming step.

Upon completion of the forming step, the panel 3 is removed from the die 15 and undergoes a process to polymerize the polymeric adhesive, for example, it is placed in an oven, typically for a period of about 30 minutes, at a temperature of about 150°C, until the adhesive has fully polymerized.

The panel 3 can then undergo any subsequent finishing steps such as, for example, further edge-trimming or blanking steps.

The optimal amount of adhesive 11 to use is determined in dependence on various parameters, for example, the tensile strength envisaged for the panel 3 in use, the required capacity for insulation against heat and/or noise and/or vibrations, and the required shear strength. Naturally, account will also be taken of the viscosity of the adhesive, of the pressure to which the panel is subject during the pressing step, and of the final gap which will be present between the matrix 17 and the punch 19 during the pressing step.

In particular, panels thus produced may be used on motor vehicles to form insulating partitions, for example, between the floor and the catalytic converter, between the engine compartment and the passenger compartment of the motor vehicle, or for the partition under the dashboard . Moreover, the rocker cover of the engine and structural elements such as the body pillars may also be produced with a panel of this type.

More generally, the elements of composite material according to the invention may be used whenever elements with good mechanical properties and low weight intended for insulation against heat and/or noise and/or vibrations are to be produced.

An example of a polymeric adhesive usable in the method of the invention is given below.

The polymeric adhesive is a two-part structural polyurethane adhesive comprising a resin A and a resin B of the type which is particularly suitable for automated supply or for supply by two-part static mixing guns.

In particular, the components A and B are resins derived from complex mixtures which comprise the following percentages by weight:
- resin A:
   glycols 50%,
   calcium carbonate 40%,
   amorphous silica 0.2%,
   aliphatic amines 0.8%,
   zeolites (silicates) 7%,
   titanium oxide 2%.
- resin B:
   aromatic MDI isocyanates, 30%,
   Al silicate 15%,
   calcium carbonate 50%,
   phthalic plasticizer 5%.

The components A and B will also have the following characteristics:
- resin A:
   viscosity: 200,000-220,000 mPas
   specific weight: 1.4 ± 0.025 g/cm³
- resin B:
   viscosity: 110,000-130,000 mPas
   specific weight: 1.7 ± 0.05 g/cm³

The mixing ratio will be:

| | |
|---|---|
| by weight | component A = 100 |
| | component B = 121 |
| by volume | component A = 100 |
| | component B = 100 |

The period of time before the polymeric adhesive starts to polymerize, known as the "post life" is between 8 and 12 minutes. During this period, slippage will be ≤ 2 mm.

The shear peel strength of the adhesive after it has undergone a polymerization process with a cycle of 10 minutes at 80°C and 7 days at ambient temperature will be:
- SMC/SMC without powder = 50 daN/cm² (where SMC is the "sheet moulding compound"),
- lamination by cataphoresis/lamination by cataphoresis - 100 daN/cm²,
- degreased lamination/degreased lamination = 80 daN/cm²

After it has undergone a polymerization process with a cycle of 10 minutes at 80°C, 30 minutes at 140°C and 90 minutes at 150°C for SMC/SMC gluing without powder, the following shear stress limit values were found:
- at 23°C shear stress = 130 daN/cm²,
- at 80°C shear stress = 40 daN/cm²,
- after a heating cycle (CTUS = Thermal Humid Static Chamber, 90% humidity, 40°C)of 500 hours:
   shear stress = 110 daN/cm².

If a primer is used to improve the adhesion and moisture resistance of the polymeric adhesive, it may be of the polyurethane, polysulphide, silicon on glass, or metal type and will require drying for about 30 minutes.

## Claims

1. A method for the forming of an element of composite material, particularly usable as a structural element of a vehicle, comprising the following steps:
- providing a pair of sheet-metal elements (5, 7),
- interposing a polymeric thermosetting structural adhesive (11) in the non-polymerised state between the sheet-metal elements (5, 7),
- joining the sheet-metal elements (5, 7) together with the polymeric adhesive (11) interposed so as to form a panel of composite material (3),
- subjecting the panel (3) to a cold-forming step in order to form the element of composite material, and
- subjecting the element of composite material to a process to polymerize the polymeric adhesive,
characterised in that the step of interposing the polymeric adhesive (11) between the sheet-metal elements (5, 7) is accomplished by distributing it in a plurality of distinct heaps.

2. A method according to Claim 1, characterised in that the sheet-metal elements (5, 7) are shaped beforehand.

3. A method according to Claim 1 or Claim 2, characterised in that an intermediate reinforcing layer (9) is interposed between the sheet-metal elements (5, 7), such layer comprising reinforcing fibres.

4. A method according to Claim 3, characterized in that the intermediate reinforcing layer (9) is shaped like the sheet-metal elements (5, 7).

5. A method according to Claim 3 or Claim 4, characterized in that the polymeric adhesive (11) is interposed between the intermediate reinforcing layer (9) and the sheet-metal elements (5, 7).

6. A method according to any one of Claims 1 to 5, characterized in that the elements (5, 7; 5, 7, 9) making up the panel (3) are held rigidly in position during the forming step by restraining means (21; 21, 23) acting substantially along the edges of the panel (3).

7. A method according to Claim 6, characterized in that the panel (3) is subjected to heating during the forming step so that the polymeric adhesive (11) undergoes a partial polymerization process.

8. A method according to any one of Claims 1 to 7, characterized in that the sheet-metal elements (5, 7) are treated in a manner such as to favour the adhesion of the polymeric adhesive (11).

9. A method according to Claim 8, characterized in that the sheet-metal elements (5, 7) are subjected to a preliminary pickling step.

10. A method according to Claim 8 or Claim 9, characterized in that a layer of primer is applied to the surfaces of the sheet-metal elements (5, 7) which are intended to contact the polymeric adhesive (11).

11. A panel of composite material including a pair of sheet-metal elements (5, 7) between which a polymeric thermosetting structural adhesive (11) in the non-polymerised state is interposed, such panel (3) being intended to be subjected to a mechanical cold-forming step while the adhesive is in the non-polymerised state so that it can completely polymerize only after performing the step in which the panel (3) is formed,
characterised in that the polymeric adhesive (11) is arranged in a plurality of distinct heaps between the sheet-metal elements (5, 7).

12. A panel according to claim 11, characterised in that it includes an intermediate reinforcing layer (9) interposed between the sheet-metal elements (5, 7), which comprises reinforcing fibres.

## Patentansprüche

1. Verfahren zum Herstellen eines Elements aus einem Verbundwerkstoff, das besonders als Strukturelement eines Fahrzeugs verwendbar ist, wobei das Verfahren folgende Schritte enthält:
- Vorsehen eines Paars von Blechelementen (5, 7);
- Einlegen eines polymeren, unter Hitze aushärtenden Strukturklebers (11) im nichtpolymerisierten Zustand zwischen den Blechelementen (5, 7);
- Verbinden der Blechelemente (5, 7) zusammen mit dem polymeren Kleber (11), der dazwischenliegt, um eine Platte aus einem Verbundwerkstoff (3) herzustellen;
- Unterwerfen der Platte (3) einem Kaltformungsschritt, um das Element aus dem Verbundwerkstoff auszubilden; und
- Unterwerfen des Elements aus dem Verbundwerkstoff einem Vorgang, um den polymeren Kleber zu polymerisieren;
dadurch gekennzeichnet, dass der Schritt, bei dem der polymere Kleber (11) zwischen die Blechelemente (5, 7) eingebracht wird, dadurch ausgeführt wird, dass der Kleber in einer Vielzahl von einzelnen Häufchen verteilt wird.

2. Verfahren gemäß Anspruch 1, dadurch gekennzeichnet, dass die Blechelemente (5, 7) im Voraus geformt werden.

3. Verfahren gemäß Anspruch 1 oder 2, dadurch gekennzeichnet, dass zwischen die Blechelemente (5, 7) eine verstärkende Zwischenschicht (9) eingebracht wird, wobei diese Schicht Verstärkungsfasern enthält.

4. Verfahren gemäß Anspruch 3, dadurch gekennzeichnet, dass die verstärkende Zwischenschicht (9) ähnlich wie die Blechelemente (5, 7) geformt ist.

5. Verfahren gemäß Anspruch 3 oder 4, dadurch gekennzeichnet, dass der polymere Kleber (11) zwischen die verstärkende Zwischenschicht (9) und die Blechelemente (5, 7) eingebracht wird.

6. Verfahren gemäß irgendeinem der Ansprüche 1 bis 5, dadurch gekennzeichnet, dass die Elemente (5, 7; 5, 7, 9), aus denen die Platte (3) gebildet wird, während des Formschritts von einer Einspanneinrichtung (21; 21, 23) fest gehalten werden, die im Wesentlichen entlang der Ränder der Platte (3) wirkt.

7. Verfahren gemäß Anspruch 6, dadurch gekennzeichnet, dass die Platte (3) während des Formschritts Hitze ausgesetzt wird, so dass der polymere Kleber (11) einem teilweisen Polymerisationsvorgang unterworfen wird.

8. Verfahren gemäß irgendeinem der Ansprüche 1 bis 7, dadurch gekennzeichnet, dass die Blechelemente (5, 7) so behandelt werden, dass die Adhäsion des polymeren Klebers (11) unterstützt wird.

9. Verfahren gemäß Anspruch 8, dadurch gekennzeichnet, dass die Blechelemente (5, 7) einem vorbereitenden Beizschritt unterworfen werden.

10. Verfahren gemäß Anspruch 8 oder 9, dadurch gekennzeichnet, dass auf jene Oberflächen der Blechelemente (5, 7), die dazu vorgesehen sind, um mit dem polymeren Kleber (11) in Berührung zu treten, eine Grundierschicht aufgebracht wird.

11. Platte aus einem Verbundwerkstoff, der ein Paar von Blechelementen (5, 7) aufweist, zwischen die ein polymerer, unter Hitze aushärtender Strukturkleber (11) im unpolymerisierten Zustand eingebracht wird, wobei die Platte (3) dazu vorgesehen ist, um einem mechanischen Kaltformschritt unterworfen zu werden, während sich der Kleber im unpolymerisierten Zustand befindet, so dass er nur dann vollständig polymerisieren kann, nachdem der Schritt ausgeführt wurde, in dem die Platte (3) geformt wird;
dadurch gekennzeichnet, dass der polymere Kleber (11) in einer Vielzahl von einzelnen Häufchen zwischen den Blechelementen(5, 7) angeordnet wird.

12. Platte gemäß Anspruch 11, dadurch gekennzeichnet, dass die Platte eine verstärkende Zwischenschicht (9) aufweist, die zwischen die Blechelemente (5, 7) eingebracht wird und Verstärkungsfasern enthält.

## Revendications

1. Procédé pour le formage d'un élément en matière composite, en particulier utilisable comme élément structurel d'un véhicule, comportant les étapes suivantes:
- prévoir une paire d'éléments en tôle (5, 7),
- interposer un adhésif polymère structurel thermodurcissable (11) dans l'état non polymérisé entre les éléments en tôle (5, 7),
- relier les éléments en tôle (5, 7) ensemble avec l'adhésif polymère (11) interposé de façon à former un panneau de matière composite (3),
- soumettre le panneau (3) à une étape de formage à froid afin de former l'élément en matière composite, et
- soumettre l'élément en matière composite à un processus de polymérisation de l'adhésif polymère,
caractérisé en ce que l'étape d'interposition de l'adhésif polymère (11) entre les éléments en tôle (5, 7) est réalisée en le répartissant en plusieurs tas distincts.

2. Procédé selon la revendication 1, caractérisé en ce que les éléments en tôle (5, 7) sont mis en forme au préalable.

3. Procédé selon la revendication 1 ou la revendication 2, caractérisé en ce qu'une couche de renfort intermédiaire (9) est interposée entre les éléments en tôle (5, 7), cette couche comportant des fibres de renfort.

4. Procédé selon la revendication 3, caractérisé en ce que la couche de renfort intermédiaire (9) est mise en forme comme les éléments en tôle (5, 7).

5. Procédé selon la revendication 3 ou la revendication 4, caractérisé en ce que l'adhésif polymère (11) est interposé entre la couche de renfort intermédiaire (9) et les éléments en tôle (5, 7).

6. Procédé selon l'une quelconque des revendications 1 à 5, caractérisé en ce que les éléments (5, 7; 5, 7, 9) constituant le panneau (3) sont maintenus rigidement en position pendant l'étape de formage par des moyens de retenue (21; 21, 23) agissant sensiblement le long des bords du panneau (3).

7. Procédé selon la revendication 6, caractérisé en ce que le panneau (3) est soumis à un chauffage pendant l'étape de formage de telle sorte que l'adhésif polymère (11) subit un processus de polymérisation partiel.

8. Procédé selon l'une quelconque des revendications 1 à 7, caractérisé en ce que les éléments en tôle (5, 7) sont traités de manière à favoriser l'adhésion de l'adhésif polymère (11) .

9. Procédé selon la revendication 8, caractérisé en ce que les éléments en tôle (5, 7) sont soumis à une étape de décapage préliminaire.

10. Procédé selon la revendication 8 ou la revendication 9, caractérisé en ce qu'une couche d'apprêt est appliquée sur les surfaces des éléments en tôle (5, 7) qui sont prévues pour venir en contact avec l'adhésif polymère (11).

11. Panneau de matière composite comprenant une paire d'éléments en tôle (5, 7) entre lesquels un adhésif polymère structurel thermodurcissable (11) dans l'état non polymérisé est interposé, ce panneau (3) étant prévu pour être soumis à une étape de formage à froid mécanique alors que l'adhésif est dans l'état non polymérisé de telle sorte qu'il peut totalement polymériser seulement après avoir réalisé l'étape dans laquelle le panneau (3) est formé,
caractérisé en ce que l'adhésif polymère (11) est disposé en plusieurs tas distincts entre les éléments en tôle (5, 7).

12. Panneau selon la revendication 11, caractérisé en ce qu'il comprend une couche de renfort intermédiaire (9) interposée entre les éléments en tôle (5, 7), qui comprend des fibres de renfort.
